# EUROPEAN PATENT APPLICATION

(11) **EP 3 912 534 A1**
(43) Date of publication of application: **24.11.2021**
(21) Application number: 21173861.2
(22) Date of filing: 14.05.2021
(51) Int. Cl.: A47J 42/08, A47J 42/06

(54) **COFFEE BEAN GRINDER**

(30) Priority: 18.05.2020 CN 202020823074 U; 20.05.2020 CN 202020854448 U; 20.05.2020 CN 202010431085
(71) Applicant: Tsann Kuen (Zhangzhou) Enterprise Co., Ltd., Fujian 363107 (CN)
(72) Inventor: ZHANG, Yanxiang, Zhangzhou, Fujian, 363107 (CN); XUE, Zhiqiang, Zhangzhou, Fujian, 363107 (CN)
(74) Representative: PGA S.p.A., Milano, Succursale di Lugano

(57) **Abstract**

A coffee bean grinder (100) includes a machine body (200) and a burr grinder (600) . The burr grinder (600) is detachably mounted to the machine body (200), and includes an adjusting mechanism (7), and a grinding mechanism (8) . The grinding mechanism (8) is connected to the adjusting mechanism (7), and includes an inner burr (84) that is rotatable about a grinding axis (X), and an outer burr (83) that surrounds the inner burr (84), and that is rotatable about the grinding axis (X) relative to the inner burr (84). The inner burr (84) is movable by the adjusting mechanism (7) along the grinding axis (X) relative to the outer burr (83) so as to adjust a space between the inner and outer burrs (84, 83).

## Description

The disclosure relates to a food processing device, and more particularly to a coffee bean grinder.

The grinding components of conventional coffee bean grinders can be divided into two types: detachable and non-detachable. For a conventional coffee bean grinder having the non-detachable grinding component, coffee grounds accumulated in the grinder after use can become hard to clean over time, which will eventually block the grinding space in the grinding component and affect the performance of the grinder.

On the other hand, for a conventional coffee bean grinder having the detachable grinding component, when the grinding component are removed for cleaning, a fineness adjustment mechanism of the grinding component can be accidentally driven during the cleaning process. As a result, when the grinding component is reinstalled, the coffee bean grinder will fail to provide a consistent grind result. In addition, such conventional coffee bean grinder uses a coupling mechanism that relies on friction and flexibly of a material (e.g., plastic) to hold the grinding component, which often results in one of two scenarios: if the material of the coupling mechanism is rigid enough to hold the grinding component firmly, the disassembly of the grinding component will require too much effort from users; and if the material of the coupling mechanism is flexible enough for users to remove the grinding component with ease, it will fail to hold the grinding component firmly in place.

Therefore, the object of the disclosure is to provide a coffee bean grinder that can alleviate at least one of the drawbacks of the prior art.

According to the disclosure, a coffee bean grinder includes a machine body and a burr grinder.

The burr grinder is detachably mounted to the machine body, and includes an adjusting mechanism and a grinding mechanism. The grinding mechanism is connected to the adjusting mechanism, and includes an inner burr that is rotatable about a grinding axis, and an outer burr that surrounds the inner burr, and that is rotatable about the grinding axis relative to the inner burr. The inner burr is movable by the adjusting mechanism along the grinding axis relative to the outer burr so as to adjust a space between the inner and outer burrs.

Other features and advantages of the disclosure will become apparent in the following detailed description of the embodiment with reference to the accompanying drawings, of which:
FIG. 1 is a perspective view illustrating an embodiment of a coffee bean grinder according to the disclosure;
FIG. 2 is a partially exploded perspective view of the embodiment, illustrating a machine body and a burr grinder;
FIG. 3 is a fragmentary sectional view of the embodiment;
FIG. 4 is a partially exploded perspective view illustrating a coupling seat mechanism and the burr grinder of the embodiment;
FIG. 5 is an exploded perspective view of the coupling seat mechanism;
FIG. 6 is another exploded perspective view of the coupling seat mechanism;
FIG. 7 is a perspective view illustrating three retaining modules and an unlocking ring of the coupling seat mechanism, and the burr grinder of the embodiment;
FIG. 8 is an exploded perspective view illustrating the retaining modules and the unlocking ring;
FIG. 9 is a sectional view of the embodiment, illustrating the retaining modules being engaged with the burr grinder;
FIG. 10 is a view similar to FIG. 9, illustrating the retaining modules being driven by the unlocking ring to become disengaged from the burr grinder;
FIG. 11 is a partially exploded perspective view of the burr grinder of the embodiment;
FIG. 12 is a partially exploded perspective view of an adjusting mechanism of the burr grinder;
FIG. 13 is another partially exploded perspective view of the burr grinder of the embodiment;
FIG. 14 is a sectional view of the burr grinder;
FIG. 15 is a fragmentary perspective view of the embodiment; and
FIG. 16 is a view similar to FIG. 14, illustrating a locking module of the embodiment being pushed downward by a sensor module to be detached from an annular toothed portion of the adjusting mechanism.

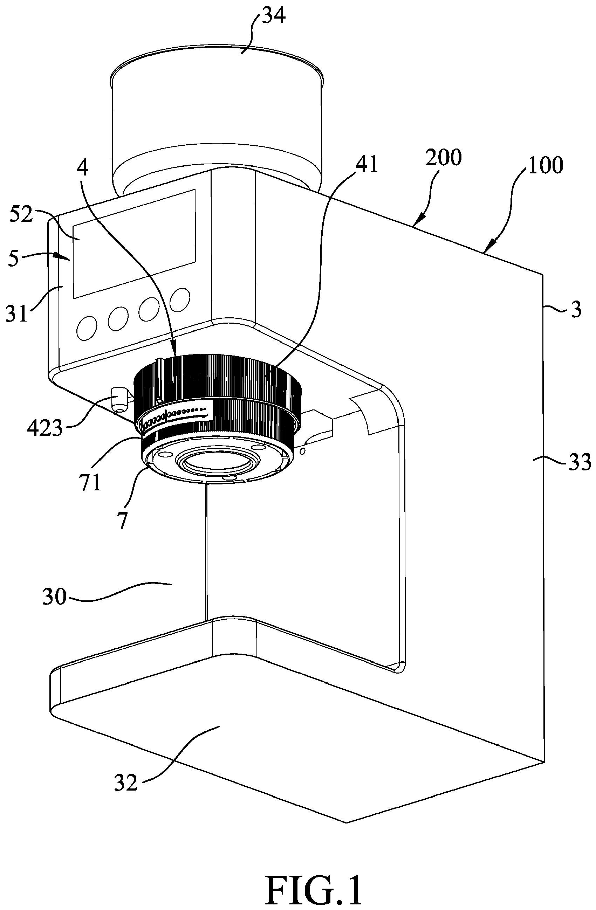

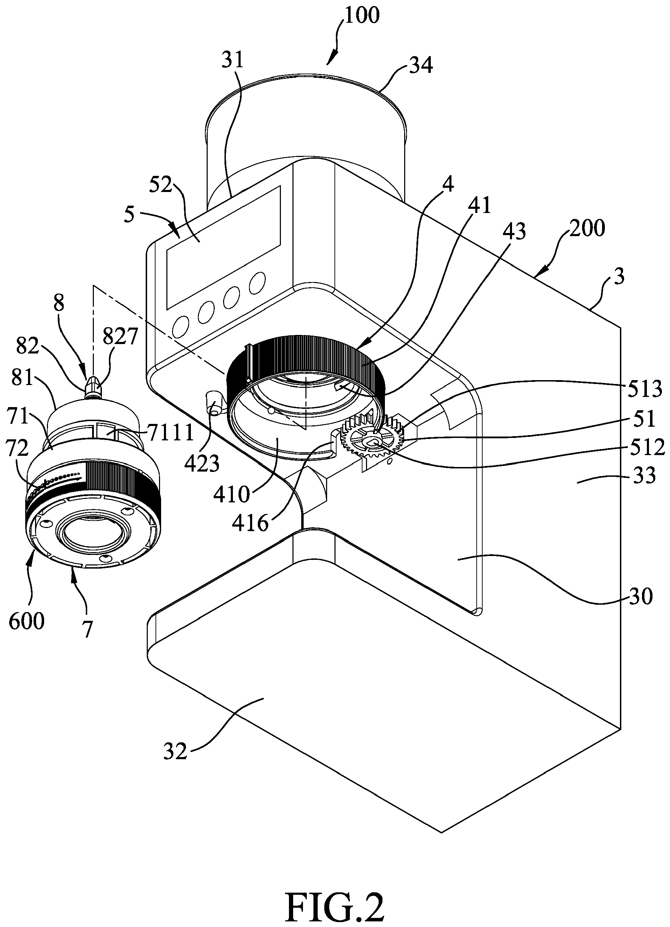

Referring to FIGS. 1 and 2, an embodiment of a coffee bean grinder 100 according to the disclosure is adapted for grinding small food products such as, but not limited to, coffee beans. The coffee bean grinder 100 includes a machine body 200, and a burr grinder 600 that is detachably mounted to the machine body 200.

The machine body 200 includes a casing unit 3, a coupling seat mechanism 4 and a fineness display mechanism 5.

The casing unit 3 has a top portion 31, a bottom portion 32 that is disposed under and spaced apart from the top portion 31, a connecting portion 33 that is connected between the top and bottom portions 31, 32, and a bean hopper 34 that is mounted atop the top portion 31, and that is adapted for receiving food products to be ground. The casing unit 3 defines a receiving space 30 between the top and bottom portions 31, 32 that is adapted for receiving the burr grinder 600 and a container (not shown).

Referring to FIGS. 2, 3 and 4, the coupling seat mechanism 4 is adapted for receiving the food products released from the bean hopper 34, and is provided for the burr grinder 600 to be mounted thereto. The coupling seat mechanism 4 includes a seat module 41, an unlocking ring 42 and a plurality of retaining modules 43.

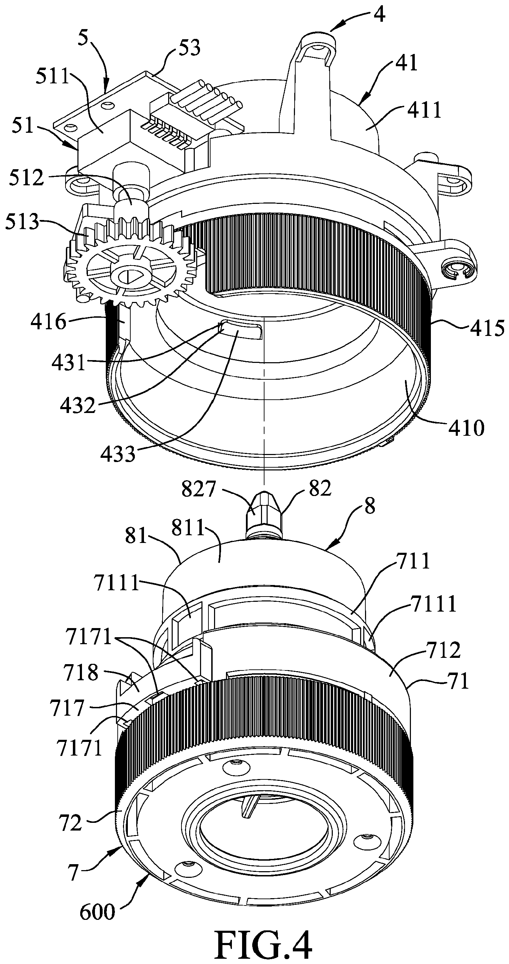

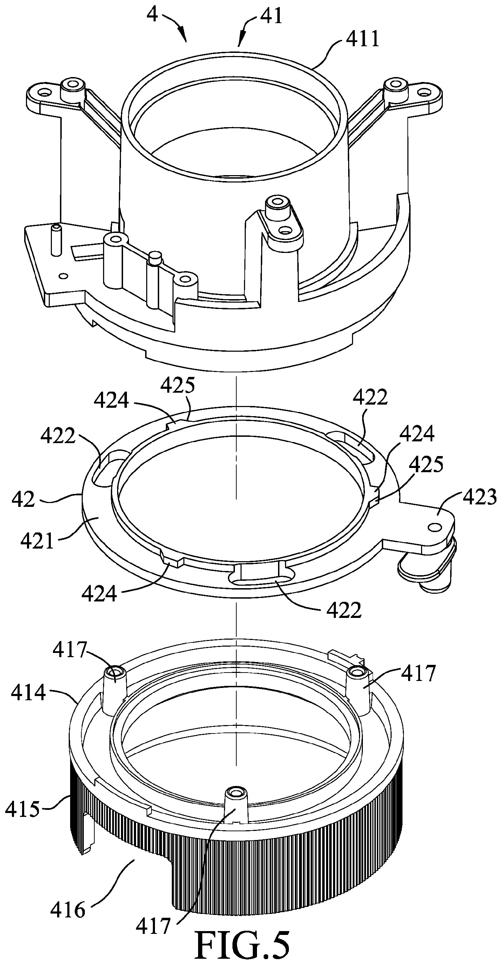

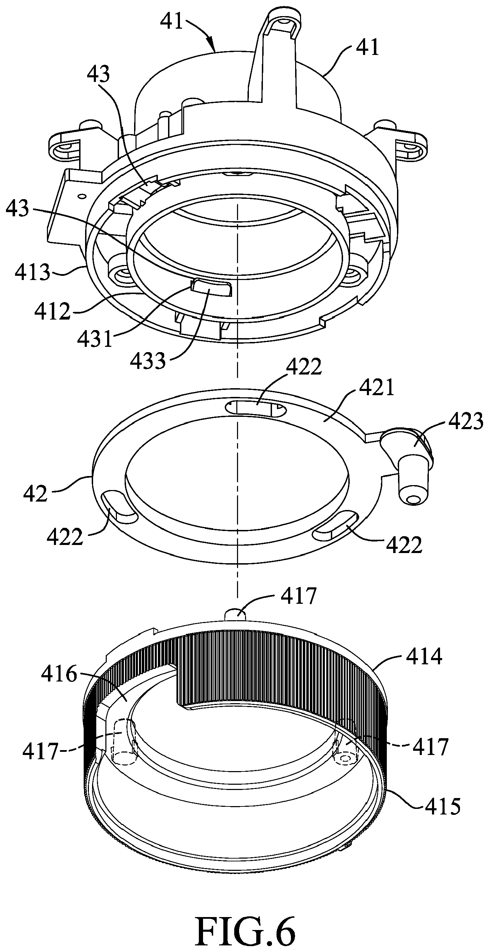

Referring to FIGS. 4, 5 and 6, the seat module 41 is mounted in the top portion 31 of the casing unit 3, is exposed to the receiving space 30, and surrounds a grinding axis (X) that extends vertically. The seat module 41 includes an upper frame member 411, and a lower frame member 414 that is connected to and disposed under the upper frame member 411, and that cooperates with the upper frame member 411 to define a grinder mounting space 410 extending along the grinding axis (X) for receiving the burr grinder 600.

The upper frame member 411 has an inner ring portion 412 surrounding the grinding axis (X), and an outer ring portion 413 surrounding and being spaced apart from the inner ring portion 412. The lower frame member 414 has an annular seat portion 415 surrounding the grinding axis (X), and a plurality of connecting poles 417 protruding upwardly from the annular seat portion 415, arranged around the grinding axis (X), and being fixedly screwed to the upper frame member 411. The annular seat portion 415 of the lower frame member 414 is formed with a through slot 416 that extends radially with respect to the grinding axis (X), and that spatially communicates with the grinder mounting space 410.

The unlocking ring 42 is mounted to the seat module 41, and is operable to rotate about the grinding axis (X) relative to the seat module 41. The unlocking ring 42 has a ring body portion 421, an operable portion 423 and a plurality of pushing portions 424.

The ring body portion 421 of the unlocking ring 42 is rotatably disposed between the upper and lower frame members 411, 414, and has a plurality of arc-shaped holes 422 formed vertically therethrough. Each of the connecting poles 417 of the lower frame member 414 extends movably through a respective one of the arc-shaped holes 422. The operable portion 423 of the unlocking ring 42 extends outwardly from the ring body portion 421 in a radial direction with respect to the grinding axis (X), and is adapted to be operated to drive rotation of the unlocking ring 42. The pushing portions 424 of the unlocking ring 42 are connected to a top end of the ring body portion 412, are arrange around the grinding axis (X), and are angularly equidistant. Each of the pushing portions 424 has a wedge surface 425 that is inclined relative to a radial direction of the grinding axis (X).

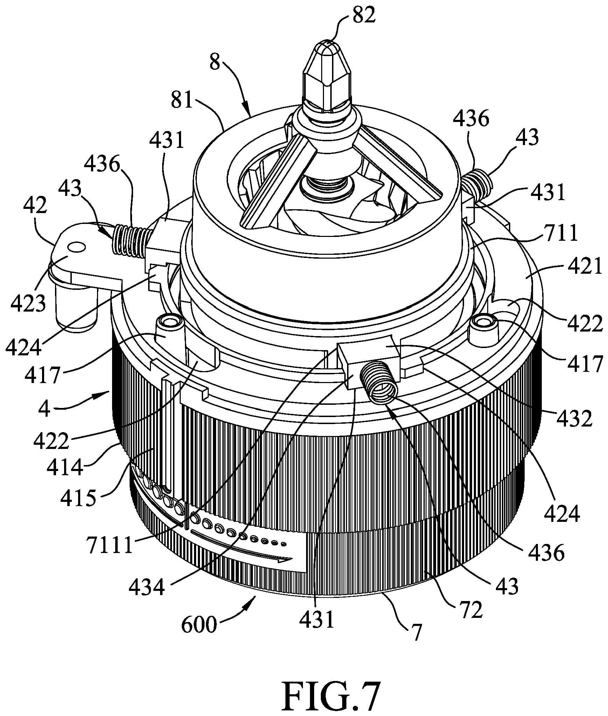

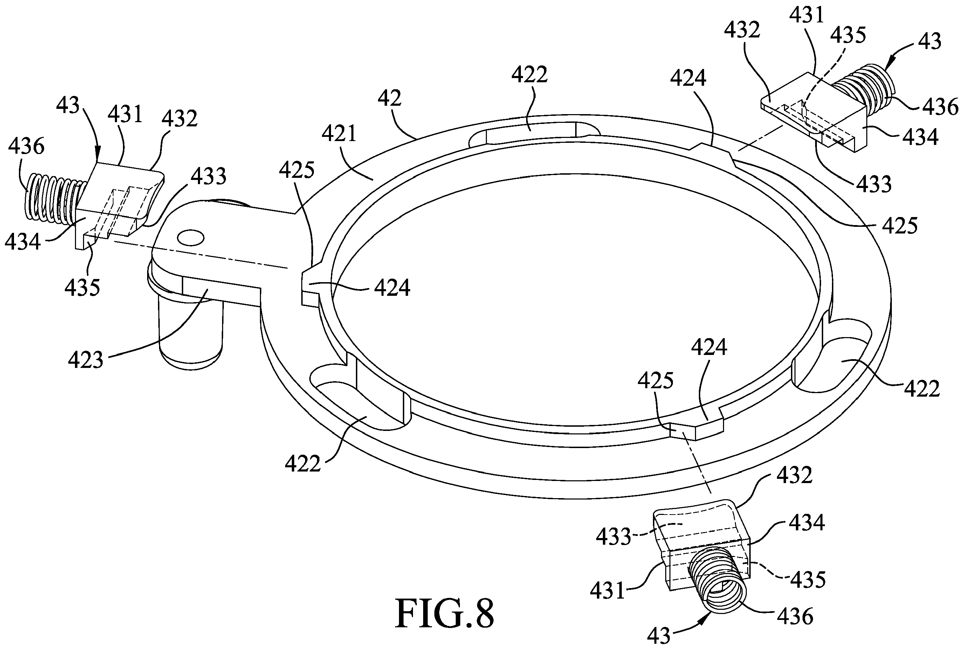

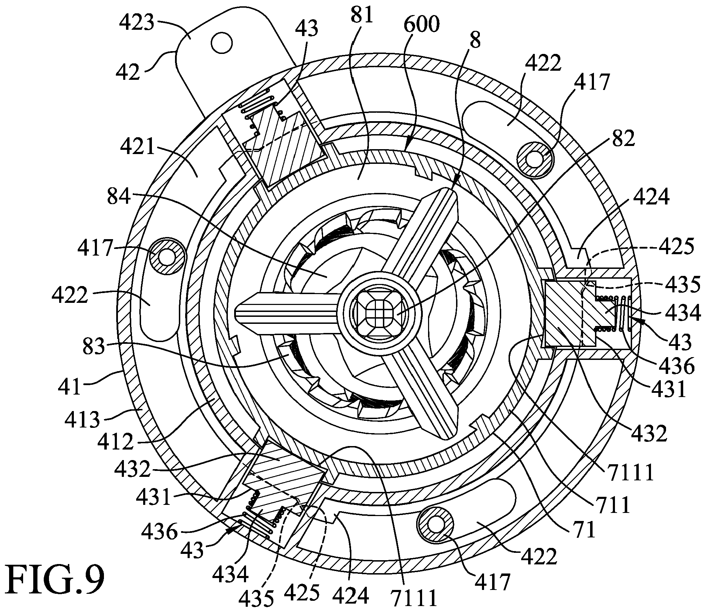

Referring to FIGS. 7, 8 and 9, the retaining modules 43 of the coupling seat mechanism 4 are arranged about and mounted to the seat module 41, extend retractably from the seat module 41 into the grinder mounting space 410 in a radial direction of the grinding axis (X), and are angularly equidistant. When the burr grinder 600 is mounted in the grinder mounting space 410 of the coupling seat mechanism 4, the retaining module 43 movably engages with the burr grinder 600 for positioning the same relative to the coupling seat mechanism 4.

The retaining modules 43 correspond in number with the pushing portions 424 of the unlocking ring 42, and correspond respectively in position with the pushing portions 424 of the unlocking ring 42. The unlocking ring 42 is operable to drive retraction of the retaining modules 43 into the seat module 41.

Each of the retaining module 43 includes a coupling head 431 and a seat resilient member 436. The coupling head 431 has an abutting portion 434 configured for abutting against the unlocking ring 42, and an engaging portion 432 extending from the abutting portion 434 into the grinder mounting space 410 to be engaged with the burr grinder 600. The seat resilient member 436 is disposed between the abutting portion 434 of the coupling head 431 and the seat module 41 for biasing the coupling head 431 away from the seat module 41.

Specifically, the engaging portion 432 of the coupling head 431 of each of the retaining modules 43 has a first guiding surface 433 that is exposed in the grinder mounting space 410, and that is provided for abutting against the burr grinder 600. The abutting portion 434 of the coupling head 431 of each of the retaining modules 43 has a second guiding surface 435 that is provided for abutting against the wedge surface 425 of a respective one of the pushing portions 424 of the unlocking ring 42.

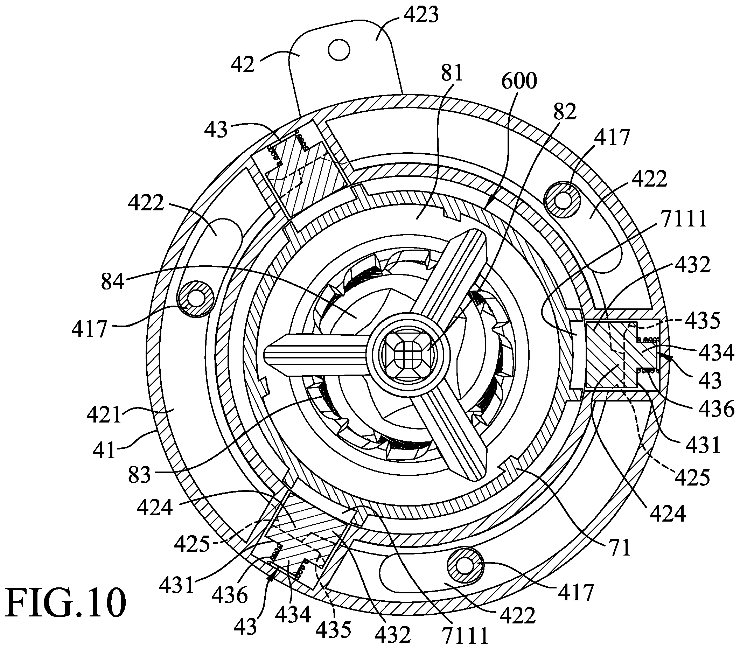

Referring to FIGS. 4, 9 and 10, when the burr grinder 600 is being received in the grinder mounting space 410, the burr grinder 600 abuts against the first guiding surface 433 of each of the retaining modules 43 so as to cause each of the retaining modules 43 to retract slightly into the seat module 41, and when the burr grinder 600 is brought into position, the coupling head 431 of each of the retaining modules 43 is biased by the seat resilient member 436 to engage the burr grinder 600, which generates an impact sound.

When the unlocking ring 42 is operated to rotate relative to the seat module 41, the wedge surface 425 of each of the pushing portions 424 contacts and pushes the abutting portion 434 of the coupling head 431 against the biasing action of the seat resilient member 436 such that the engaging portion 432 becomes disengaged from the coupling grooves 7111 of the connection seat 71.

It should be noted that, rotation of the unlocking ring 42 is limited within a predetermined range due to movement of each of the connecting poles 417 within the respective one of the arc-shaped holes 422.

Referring to FIGS. 2, 4 and 6, the fineness display mechanism 5 includes a sensor module 51, a display module 52 and a control module 53.

The sensor module 51 includes a sensor 511 and a transmission shaft 512. The transmission shaft 512 has a transmission toothed portion 513 that extends through the through slot 416 of the lower frame member 414 of the seat module 41 into the grinder mounting space 410 to be engaged with the burr grinder 600, such that the burr grinder 600 drives rotation of the transmission shaft 512. The sensor 511 is configured to measure the rotational angle of the transmission shaft 512 and transmit the measurement signal to the control module 53 to determine a gap value of the burr grinder 600, and the control module 53 will control the display module 52 to display the gap value.

Specifically, the sensor module 51 of the present embodiment is configured as an encoder or a Hall-effect sensor. As such, the sensor 511 is able to measure angular variation by sensing rotational motion of the transmission shaft 512 or variation of magnetic field of the transmission shaft 512, and in turn determines the gap value that corresponds to the angular variation. Since the working principles of the encoder and the Hall-effect sensor are well known in the art, they will not be described in further details hereinafter.

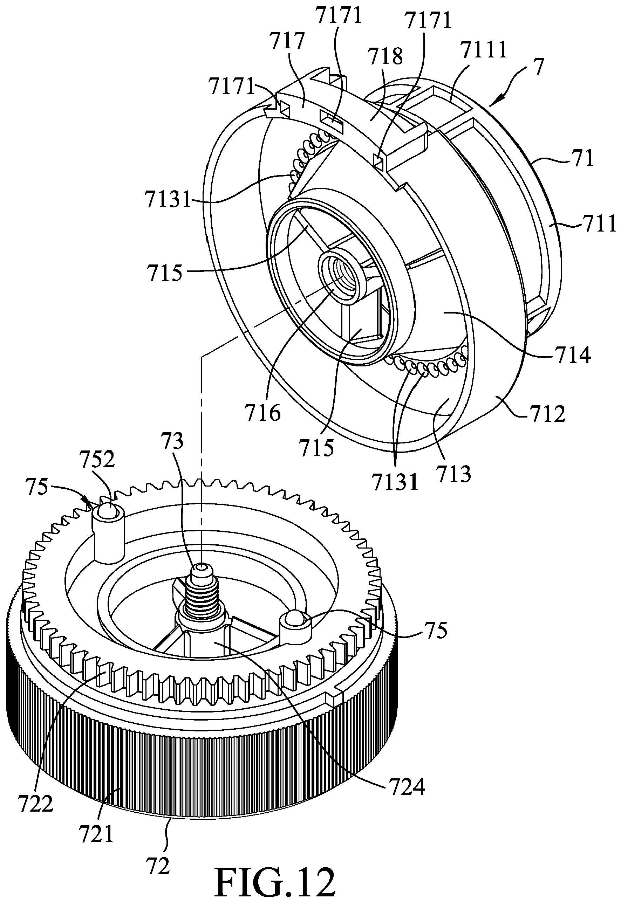

Referring to FIGS. 4, 11 and 12, the burr grinder 600 includes an adjusting mechanism 7 detachably mounted to the seat module 41 and connected to the transmission shaft 512, and a grinding mechanism 8 detachably mounted atop the adjusting mechanism 7.

The adjusting mechanism 7 includes a connecting seat 71, an adjusting ring member 72, a top abutting piece 73, a locking module 74 and two positioning module 75.

The connecting seat 71 abuts upwardly against the first guiding surface 433 of each of the retaining modules 43 of the coupling seat mechanism 4, and has a first connecting ring 711, a second connecting ring 712, a linking wall 713, a downwardly converging portion 714, a plurality of linking arms 715, a receiving sleeve 716, an installation bottom wall 717, an installation upright wall 718 and an installation slot 7121.

The first connecting ring 711 has a plurality of coupling grooves 7111 formed in an outer surface thereof, and a plurality of coupling sections 7112 disposed on an inner surface opposite to the outer surface. The coupling grooves 7111 correspond in number with the retaining modules 43, and each of coupling grooves 7111 is detachably engaged with the engaging portion 432 of a respective one of the retaining modules 43 so as to retain the connecting seat 71 on the seat module 41. The coupling sections 7112 are arranged about the grinding axis (X), and are angularly equidistant.

The second connecting ring 712 is disposed under the first connecting ring 711, and has an inner diameter greater than that of the first connecting ring 711.

The linking wall 713 extends horizontally, is connected between the first and second connecting rings 711, 712, and has a plurality of spaced-apart positioning cavities 7131 that are arranged about the grinding axis (X).

The downwardly converging portion 714 extends downwardly from the inner surface of the first connecting ring 711 into the second connecting ring 712, and has an inner diameter that decreases downwardly.

The receiving sleeve 716 is disposed in the second connecting ring 712 and surrounds the grinding axis (X) . Each of the linking arms 715 extends inwardly from an inner surface of the second connecting ring 712 towards the grinding axis (X), and is connected to the bearing sleeve 716.

The installation bottom wall 717 protrudes outwardly from a bottom end of the second connecting ring 712, extends circumferentially with respect to the grinding axis (X), and is formed with a plurality of guiding through holes 7171 that extend vertically therethrough, and that are angularly spaced apart with respect to the grinding axis (X). The installation upright wall 718 extends upwardly from a periphery of the installation bottom wall 717, is connected to an outer surface of the second connecting ring 712, and extends circumferentially with respect to the grinding axis (X).

The installation slot 7121 is disposed above the installation bottom wall 717, extends radially through the second connecting ring 712 and upwardly through the linking wall 713, and is partially surrounded by the installation upright wall 718.

The adjusting ring member 72 is co-axially connected to the connecting seat 71 and is operable to rotate about the grinding axis (X) relative to the connecting seat 71. The adjusting ring member 72 has an operable ring portion 721, an annular toothed portion 722, a plurality of rib portions 723 and an axial portion 724.

The operable ring portion 721 surrounds the grinding axis (X) . The annular toothed portion 722 surrounds the grinding axis (X), is fixed on the operable ring portion 721, and is disposed in the second connecting ring 712 of the connecting seat 71 with a portion thereof being exposed from the installation slot 7121 of the connecting seat 71. The axial portion 724 is centered at the grinding axis (X), and is surrounded by the operable ring portion 721. The rod portions 723 extends from an inner surface of the operable ring portion 721 towards the grinding axis (X) and are connected to the axial portion 724.

The top abutting piece 73 is fixedly connected to the axial portion 724 of the adjusting ring member 72, and extends upwardly to be threadedly engaged with and protruding out of the bearing sleeve 716 of the connecting seat 71, such that when the operable ring portion 721 of the adjusting ring member 72 is operated, rotation of the adjusting ring member 72 relative to the connecting seat 71 results in linear movement of the top abutting piece 73 along the grinding axis (X) relative to the connecting seat 71, and a height of a top end of the top abutting piece 73 that protrudes out of the bearing sleeve 716 varies during the linear movement thereof.

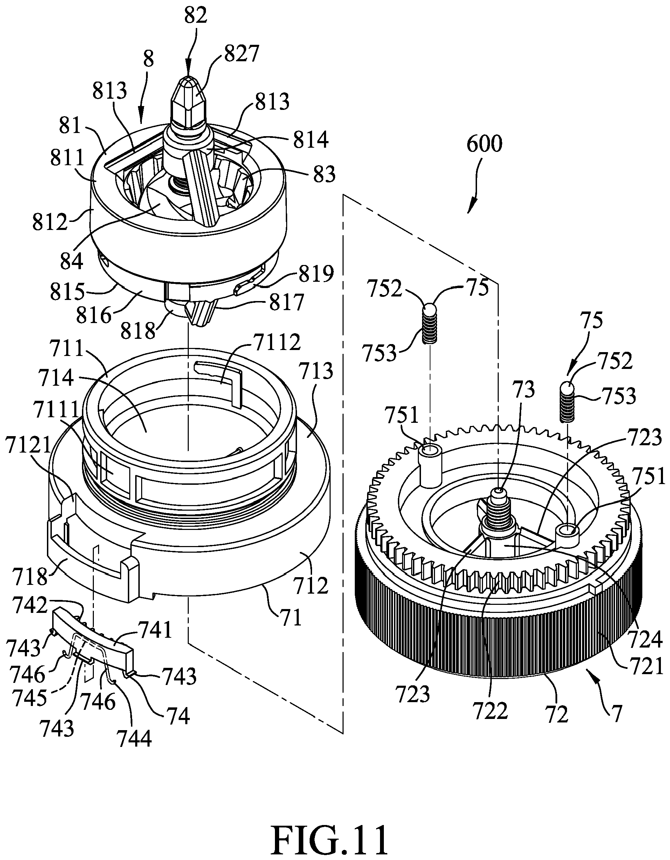

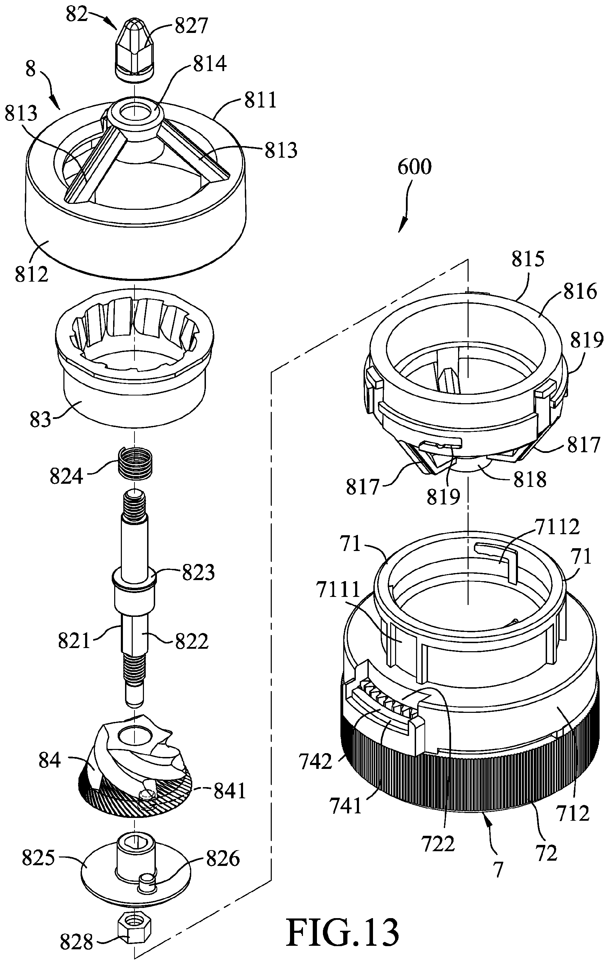

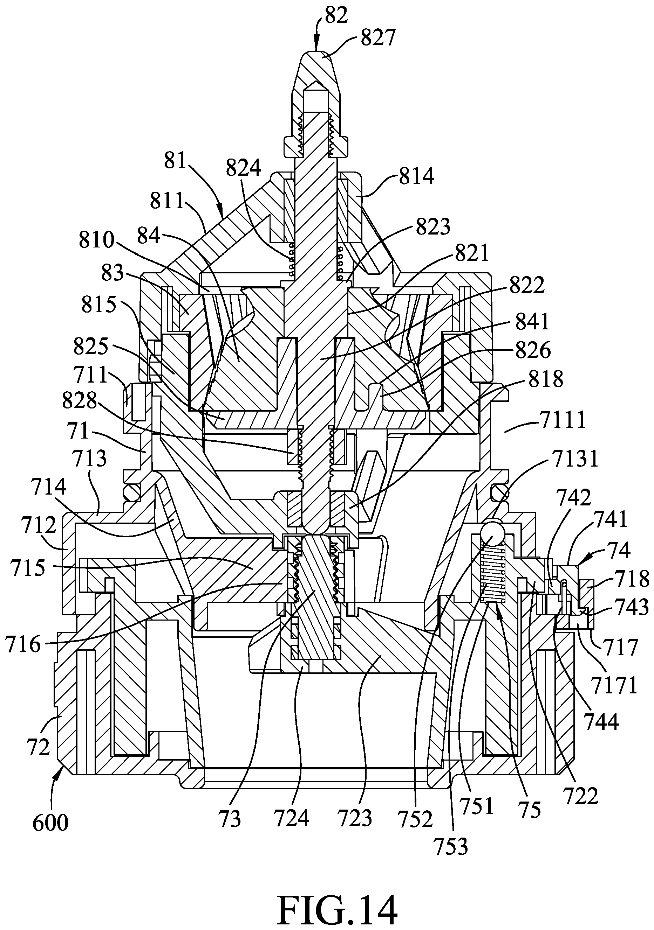

Referring to FIGS. 11, 13 and 14, the locking module 74 includes a locking member 741 mounted to the connecting seat 71, and a locking resilient member 744 disposed between the connecting seat 71 and the locking member 741.

The locking member 741 is arc-shaped and centered on the grinding axis (X), is disposed in the installation slot 7121, and abuts against an inner surface of the installation upright wall 718. Specifically, the locking member 741 has a locking toothed portion 742 and a plurality of locking side portions 743.

The locking toothed portion 742 of the locking member 741 is disposed above the installation bottom wall 717 of the connecting seat 71, is exposed from the installation slot 7121, and extends along a circumferential direction of the annular toothed portion 722 of the adjusting ring member 72. The locking toothed portion 742 is configured to be detachably meshed with the annular toothed portion 722, and is movable by the machine body 200 (via the installation slot 7121) in a direction of the grinding axis (X) relative to the connecting seat 71 to be unmeshed from the annular toothed portion 722 of the adjusting ring member 72. Each of the locking side portions 743 of the locking member 741 extends downwardly from the locking toothed portion 742, has a hook shape, and is movably engaged with a corresponding one of the guiding through holes 7171 of the installation bottom wall 717.

The locking resilient member 744 has a main portion 745, and two transverse portions 746. The main portion 745 extends along a longitudinal direction of the locking member 741, and abuts against the locking member 741. The transverse portions 746 are transversely connected to opposite ends of the main portion 745, respectively, and extend downwardly and abut resiliently against the installation bottom wall 717 of the connecting seat 71 (i.e., each of the transverse portions 746 has a distal end connected to the connecting seat 71). As such, when the locking resilient member 744 is pressed, the distal ends of the transverse portions 746 thereof are forced to move away from each other. However, configuration of the locking resilient member 744 is not limited to the present embodiment.

When the burr grinder 600 is detached from the machine body 200, the locking member 741 is biased by the locking resilient member 744 to be engaged with the adjusting ring member 72 (i.e., the locking toothed portion 742 is meshed with the annular toothed portion 722) so as to prevent rotation of the adjusting ring member 72 relative to the connecting seat 71.

It should be noted that, by virtue of the hook-shaped locking side portions 743, when the locking member 741 is engaged with the adjusting ring member 72, each of the locking side portions 743 abuts upwardly against the installation bottom wall 717 and prevents the locking member 741 from falling out of the installation slot 7121 by the biasing force of the locking resilient member 744. In addition, the locking member 741 is restricted by the engagement between the locking side portions 743 and the guiding through holes 7171 to move along the direction of the grinding axis (X); that is, the locking member 741 is not allowed to move in the circumferential direction of the annular toothed portion 722, thereby preventing the rotation of the adjusting ring member 72.

When the burr grinder 600 is being mounted to the machine body 200, the locking member 741 is forced by the machine body 200 against the biasing action of the locking resilient member 744 to move downwardly and separate from the adjusting ring member 72 (i.e., the locking toothed portion 742 is unmeshed from the annular toothed portion 722) so as to allow rotation of the adjusting ring member 72 relative to the connecting seat 71.

Each of the positioning modules 75 is mounted to the adjusting ring member 72, and has a socket 751, a positioning member 752 and a resilient member 753.

For each of the positioning modules 75, the socket 751 is formed in a top surface of the operable ring portion 721, the positioning member 752 is at least partially received in the socket 751 and is movable relative to the socket 751, and the resilient member 753 is received in the socket 751 and abuts resiliently against and is disposed between the positioning member 752 and the operable ring portion 721, such that the positioning member 752 is detachably engaged with a corresponding one of the positioning cavities 7131 for positioning the adjusting ring member 72 relative to the connecting seat 71.

The grinding mechanism 8 includes a burr holding module 81, a drive shaft module 82, an inner burr 84 and an outer burr 83. The burr holding module 81 is detachably coupled to the connecting seat 71 of the adjusting mechanism 7. The drive shaft module 82 extends rotatably along the grinding axis (X) through the burr holding module 81.

The outer burr 83 is disposed in and fixedly mounted to the burr holding module 81, and surrounds the grinding axis (X). The inner burr 84 is disposed in the burr holding module 81, is sleeved on and co-rotatable with the drive shaft module 82, and has an anti-rotation cavity 841 formed in a bottom surface thereof. The outer burr 83 surrounds and is spaced apart from the inner burr 84. The inner burr 84 is rotatable about the grinding axis (X) relative to the inner burr 84 for grinding the food products, and the inner burr 84 is movable by the adjusting mechanism 7 along the grinding axis (X) relative to the outer burr 83 so as to adjust a space between the inner and outer burrs 84, 83 for the grinding; since the working principle of the inner and outer burrs 84, 83 is well known in the art, it will not be described in further details hereinafter.

Specifically, the burr holding module 81 includes a first support frame 811 and a second support frame 815 that is disposed under and connected to the first support frame 811. The first support frame 811 and the second support frame 815 cooperatively define a burr receiving space 810 that extends vertically therethrough. The inner and outer burrs 84, 83 are received in the burr receiving space 810.

The first support frame 811 has a first surrounding wall 812, a plurality of first extending arms 813 and a first shaft sleeve 814. The first surrounding wall 812 surrounds the grinding axis (X). The first extending arms 813 are arranged about the grinding axis (X), and each of the first extending arms 813 extends upwardly and slantedly from the first surrounding wall 812 towards the grinding axis (X). The first shaft sleeve 814 is connected to a distal end of each of the first extending arms 813 and surrounds the grinding axis (X).

The second support frame 815 has a second surrounding wall 816, a plurality of second extending arms 817, a second shaft sleeve 818, and a plurality of engaging segments 819. The second surrounding wall 816 surrounds the grinding axis (X). The second extending arms 817 are arranged about the grinding axis (X), and each of the second extending arms 817 extends downwardly and slantedly from the second surrounding wall 816 towards the grinding axis (X) . The second shaft sleeve 818 is connected to a distal end of each of the second extending arms 817 and surrounds the grinding axis (X) such that the second shaft sleeve 818 is vertically aligned with the first shaft sleeve 814. The engaging segments 819 are connected to an outer surface of the second surrounding wall 816, and are angularly spaced apart from each other.

The drive shaft module 82 is connected between the inner burr 84 of the burr holding module 81 and the adjusting mechanism 7, and is drivable by the adjusting mechanism 7 to move the inner burr 84 along the grinding axis (X) relative to the outer burr 83.

Specifically, the drive shaft module 82 includes a drive shaft 821, a shaft biasing member 824, an inner burr holder 825, a drive bushing 827 and a nut piece 828.

The drive shaft 821 has a shaft body 822 and a fixed ring portion 823. The shaft body 822 of the drive shaft 821 extends movably through the burr receiving space 810 of the burr holding module 81 along the grinding axis (X), and has opposite end segments extending movably through the first shaft sleeve 814 and the second shaft sleeve 818, respectively. The fixed ring portion 823 of the drive shaft 821 protrudes radially from and surrounds the shaft body 822. The inner burr 84 is sleeved fixedly on the shaft body 822 of the drive shaft 821 with the fixed ring portion 823 abutting against a top end thereof.

The shaft biasing member 824 is sleeved on the drive shaft 821 and resiliently mounted between the burr holding module 81 and the drive shaft 821 such that a bottom end of the drive shaft 821 is biased by the shaft biasing member 824 to contact a top end of the top abutting piece 73, and that the top abutting piece 73 is movable relative to the burr holding module 81 along the grinding axis (X).

The inner burr holder 825 is non-rotatably sleeved on the drive shaft 821, abuts against the bottom surface of the inner burr 84, and has an anti-rotation protrusion 826 that protrudes upwardly into the anti-rotation cavity 841 of the inner burr 84.

The drive bushing 827 is disposed above the first shaft sleeve 814, is fixedly mounted to the top segment of the shaft body 822 of the drive shaft 821 that protrudes out of the first shaft sleeve 814, and has a polygonal cross section.

The nut piece 828 is threadedly engaged with a bottom segment of the drive shaft 821, and abuts against a bottom end of the inner burr holder 825 such that the inner burr 84 is clamped and positioned between the inner burr holder 825 and the fixed ring portion 823.

To install the grinding mechanism 8 to the connecting seat 71 of the adjusting mechanism 7, the second support frame 815 of the burr holding module 81 is to be inserted into the first connecting ring 711 and to be rotated relative to the first connecting ring 711 so as to engage the engaging segments 819 of the burr holding module 81 with the coupling sections 7112 of the first connecting ring 711. When the burr holding module 81 is installed to the connecting seat 71, the bottom end of the drive shaft 821 should abut against the top end of the top abutting piece 73 of the adjusting mechanism 7.

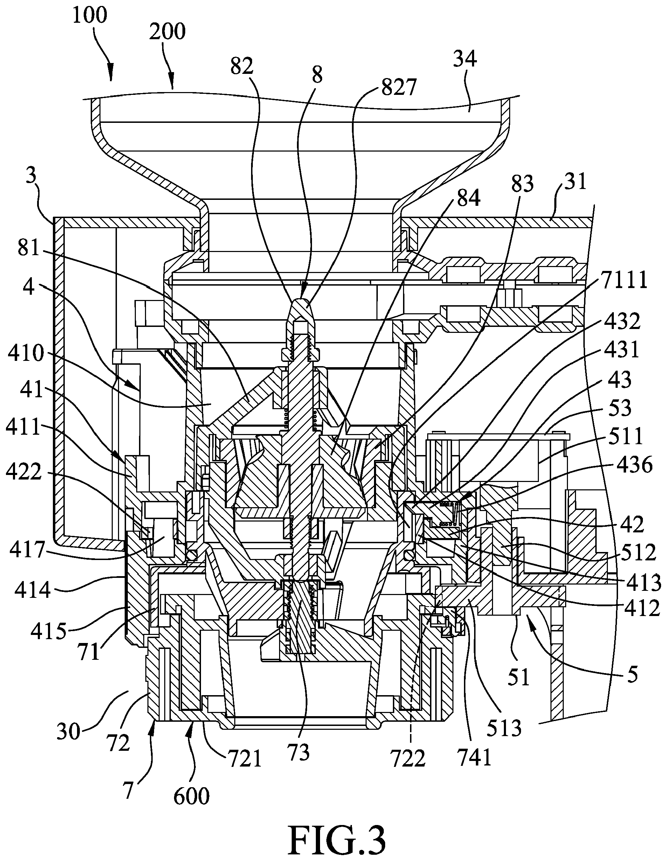

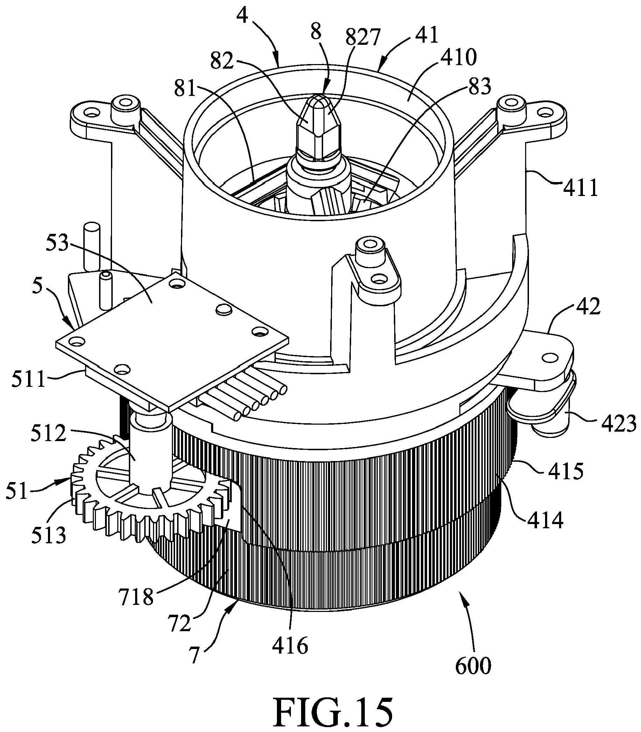

Referring to FIGS. 3, 4 and 15, to mount the adjusting mechanism 7 and the grinding mechanism 8 to the seat module 41 (i.e., to mount the burr grinder 600 to the machine body 200), the adjusting mechanism 7 is placed into the grinder mounting space 410. When an outer periphery of the first connecting ring 711 of the connecting seat 71 presses against the first guiding surface 433 of each of the retaining modules 43, the coupling head 431 of each of the retaining modules 43 is forced thereby to retract into the upper frame member 411 of the seat module 41. Once the connecting seat 71 moves to a position where the coupling head 431 of each of the retaining modules 43 is registered with a respective one of the coupling grooves 7111 of the connecting seat 71, the coupling head 431 is biased by the seat resilient member 436 of each of the retaining modules 43 to extend out of the seat module 41 to be engaged with the respective one of the coupling grooves 7111, so as to generate an impact sound, which indicates that the adjusting mechanism 7 is positioned relative to the seat module 41.

It should be noted that, when the connecting seat 71 is being received in the grinder receiving space 410, the transmission toothed portion 513 of the transmission shaft 512 of the sensor module 51 is received in the installation slot 7121 of the connecting seat 71, pushes the locking member 741 of the locking module 74 against the biasing force of the locking resilient member 744 and away from the annular toothed portion 722 of the adjusting ring member 72, and meshes with the annular toothed portion 722 instead (see FIG. 3), so that rotation of the adjusting ring member 72 will result in rotation of the transmission shaft 512.

Once the adjusting mechanism 7 is mounted to and positioned in the seat module 41 and the transmission toothed portion 513 of the transmission shaft 512 is fully meshed with the annular toothed portion 722 of the adjusting ring member 72, the adjusting ring member 72 is detached from the locking module 74, and the adjusting ring member 72 is allowed to rotate so as to adjust the space between the inner and outer burrs 84, 83.

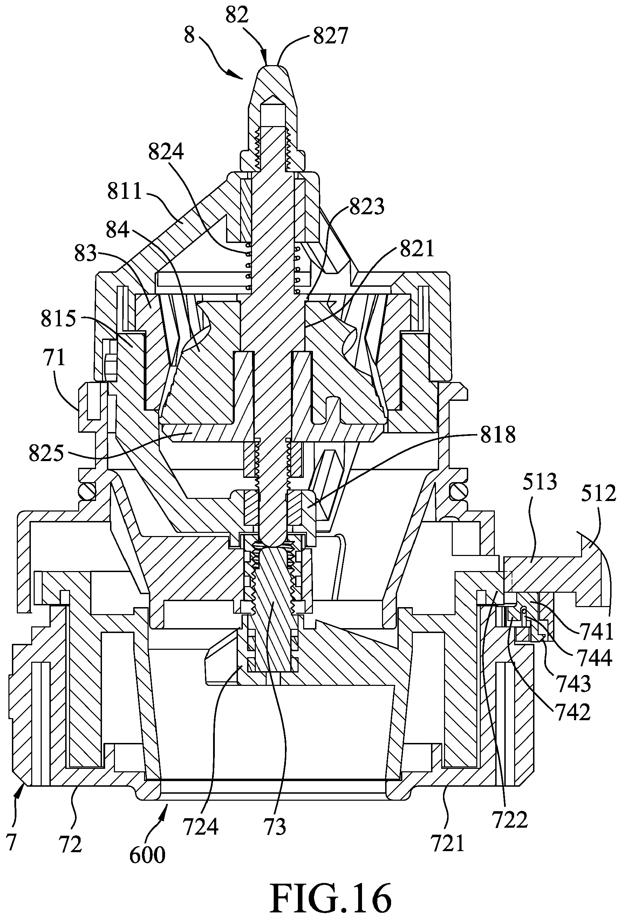

Referring to FIGS. 3, 14 and 16, to adjust the space between the inner and outer burrs 84, 83, the adjusting ring member 72 is rotated relative to the connecting seat 71, which results in the linear movement of the top abutting piece 73 relative to the connecting seat 71. When the adjusting ring member 72 is rotated in a direction to move the top abutting piece 73 upward, the inner burr 84 is moved upward relative to the outer burr 83 and compresses the shaft biasing member 824, and the space between the inner and outer burrs 84, 83 decreases so that the inner and outer burrs 84, 83 can produce fine grinds. When the adjusting ring member 72 is rotated in an opposite direction, the top abutting piece 73 and the inner burr 84 are forced by the shaft biasing member 824 to move downward relative to the outer burr 83, and the space between the inner and outer burrs 84, 83 increases so that the inner and outer burrs 84, 83 can produce coarse grinds.

During the above-mentioned adjusting process, the annular toothed portion 722 of the adjusting ring member 72, being meshed with the transmission toothed portion 513 of the transmission shaft 512, drives the transmission shaft 512 to rotate with the adjusting ring member 72. Then, the sensor 511 measures the angular variation by sensing rotational motion of the transmission shaft 512. The control module 53 in turn determines the gap value that corresponds to the angular variation to represent the space between the inner and outer burrs 84, 83, and controls the display module 52 to display the gap value.

For example, in the present embodiment, if a change of the gap value from 0 to L represents one turn of rotation of the adjusting ring member 72, and if the gear ratio between the annular toothed portion 722 of the adjusting ring member 72 and the transmission toothed portion 513 of the transmission shaft 512 is 1:1, when the transmission shaft 512 is rotated by 90 degrees, the gap value will change from 0 to 0.25L. Similarly, when the transmission shaft 512 is rotated from 90 to 270 degrees, the gap value will change from 0.25L to 0.75L.

In addition, during the adjusting process, rotation of the adjusting ring member 72 also drives the positioning modules 75 to move relative to the connecting seat 71. The positioning member 752 of each of the positioning modules 75 is forced to be disengaged from the corresponding one of the positioning cavities 7131 and is pressed into the socket 751 against the biasing action of the resilient member 753 of the respective one of the positioning modules 75. When the positioning member 752 of each of the positioning modules 75 is moved to a position to become registered with another one of positioning cavities 7131, the positioning member 752 of each of the positioning modules 75 is biased by the resilient member 753 of the respective one of the positioning modules 75 to engage with said another one of positioning cavities 7131, generating an impact sound. As such, a user may determine the degree of adjustment by counting the number of the impact sounds generated.

After the burr grinder 600 is securely mounted to the coupling seat mechanism 4, the drive bushing 827 of the grinding mechanism 8 is connected to a driving mechanism (not shown) installed in the machine body 3. At this point, the grinding mechanism 8 can be driven by the driving mechanism to rotate the inner burr 84 and grind the food products that pass through the coupling seat mechanism 4. The ground food products will then pass through the connecting seat 71 of the adjusting mechanism 7 into the receiving space 30 and be received by the container (not shown) disposed therein. It should be noted that the driving mechanism may be configured as, but not limited to, a motor that directly drives the drive shaft module 82, a motor that drives the drive shaft module 82 via a transmission belt or a gearset, or a mechanism that drives the drive shaft module 82 via manual operation.

Referring to FIGS. 2, 10 and 14, to detach the burr grinder 600 from the coupling seat mechanism 4, the unlocking ring 42 is rotated relative to the seat module 41 to drive the retraction of the retaining modules 43. Once the retaining modules 43 become detached from the coupling grooves 7111 of the connecting seat 71, the burr grinder 600 can be moved downwardly out of the grinder receiving space 410 of the coupling seat mechanism 4. During this process, the transmission toothed portion 513 of the transmission shaft 512 of the sensor module 51 becomes unmeshed from the annular toothed portion 722 of the adjusting ring member 72, and the locking member 741 of the locking module 74 is no longer pressed thereby. As such, the locking module 741 is biased by the locking resilient member 744 to move upward and the locking toothed portion 742 of locking member 741 is meshed with the annular toothed portion 722 of the adjusting ring member 72 again, and rotation of the adjusting ring member 72 relative to the connecting seat 71 is now prevented by the locking module 74. In such a manner, the space between the inner and outer burrs 84, 83 is prevented from being accidentally changed whenever the burr grinder 600 is detached from the coupling seat mechanism 4, ensuring consistent grind sizes.

Referring to FIG. 11, to detach the grinding mechanism 8 from the adjusting mechanism 7 for cleaning, the burr holding module 81 is rotated relative to the connecting seat 71, causing the engaging segments 819 to become detached from the coupling sections 7112, and the grinding mechanism 8 is allowed to be moved upwardly away from the adjusting mechanism 7.

It should be noted that, in the present embodiment, the space between the inner and outer burrs 84, 83 is adjusted via the adjusting ring member 72 of the adjusting mechanism 7 driving the top abutting piece 73 to move relative to the connecting seat 71. However, in other embodiment of the disclosure, the adjusting mechanism 7 may be configured as a gearset, a rack and pinion, or any other mechanisms that are capable of converting rotational motion into linear motion.

In sum, the present embodiment of the coffee bean grinder according to the disclosure has the following advantages.

By virtue of the adjusting mechanism 7 being capable of adjusting the space between the inner and outer burrs 84, 83, and the configuration of the sensor module 51 that only allows the adjusting mechanism 7 to perform its adjusting feature when it is mounted to the seat module 41, the present embodiment is capable of providing consistent grind results. Moreover, by virtue of the configurations of the unlocking ring 42, the retaining modules 43 of the coupling seat mechanism 4 and the adjusting mechanism 7, the burr grinder 600 not only can be securely mounted to the coupling seat mechanism 4, but can be easily detached therefrom with little effort.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A coffee bean grinder (100) **characterized by**:
a machine body (200); and
a burr grinder (600) detachably mounted to said machine body (200), and including
an adjusting mechanism (7), and
a grinding mechanism (8) that is connected to said adjusting mechanism (7), and that includes
an inner burr (84) being rotatable about a grinding axis (X), and
an outer burr (83) surrounding said inner burr (84), and being rotatable about the grinding axis (X) relative to said inner burr (84), said inner burr (84) being movable by said adjusting mechanism (7) along the grinding axis (X) relative to said outer burr (83) so as to adjust a space between said inner and outer burrs (84, 83).

2. The coffee bean grinder (100) as claimed in Claim 1, **characterized in that** said grinding mechanism (8) further includes a drive shaft module (82) that is connected between said inner burr (84) and said adjusting mechanism (7), and that is drivable by said adjusting mechanism (7) to move said inner burr (84) along the grinding axis (X) relative to said outer burr (83) .

3. The coffee bean grinder (100) as claimed in Claim 2, **characterized in that**:
said grinding mechanism (8) further includes a burr holding module (81), said inner and outer burrs (84, 83) being disposed in said burr holding module (81);
said drive shaft module (82) includes a drive shaft (821) that extends movably through said burr holding module (81) along the grinding axis (X), said inner burr (84) being sleeved fixedly on said drive shaft (821); and
said adjusting mechanism (7) includes a top abutting piece (73) that is movable relative to said burr holding module (81) along the grinding axis (X), a bottom end of said drive shaft (821) being biased to contact a top end of said top abutting piece (73).

4. The coffee bean grinder (100) as claimed in Claim 3, **characterized in that** said drive shaft module (82) further includes a shaft biasing member (824) that is mounted between said burr holding module (81) and said drive shaft (821) for biasing said drive shaft (821) to contact said top abutting piece (73).

5. The coffee bean grinder (100) as claimed in Claim 3, **characterized in that** said adjusting mechanism (7) further includes:
a connecting seat (71) that is detachably coupled to said burr holding module (81); and
an adjusting ring member (72) that is connected to said connecting seat (71) and that is operable to rotate about the grinding axis (X) relative to said connecting seat (71), said top abutting piece (73) being connected fixedly to said adjusting ring member (72) such that rotation of said adjusting ring member (72) relative to said connecting seat (71) drives said top abutting piece (73) and said drive shaft (821) to move relative to said burr holding module (81) along the grinding axis (X) .

6. The coffee bean grinder (100) as claimed in Claim 5, **characterized in that** said top abutting piece (73) is threadedly engaged with said connecting seat (71) such that rotation of said adjusting ring member (72) relative to said connecting seat (71) results in linear movement of said top abutting piece (73) along the grinding axis (X) relative to said connecting seat (71) .

7. The coffee bean grinder (100) as claimed in Claim 5, **characterized in that**:
said connecting seat (71) has a plurality of spaced-apart positioning cavities (7131) that are arranged about the grinding axis (X); and
said adjusting mechanism (7) further includes at least one positioning module (75) that is mounted to said adjusting ring member (72), and that is detachably engaged with at least one of said positioning cavities (7131) for positioning said adjusting ring member (72) relative to said connecting seat (71).

8. The coffee bean grinder (100) as claimed in Claim 5, **characterized in that**:
said adjusting mechanism (7) further includes a locking module (74) that includes
a locking member (741) mounted to said connecting seat (71), and movable to be detachably engaged with said adjusting ring member (72), and
a locking resilient member (744) disposed between said connecting seat (71) and said locking member (741);
when said burr grinder (600) is detached from said machine body (200), said locking member (741) is biased by said resilient member (744) to be engaged with said adjusting ring member (72) so as to prevent rotation of said adjusting ring member (72) relative to said connecting seat (71); and
when said burr grinder (600) is mounted to said machine body (200), said locking member (741) is forced by said machine body (200) against the biasing action of said resilient member (744) to separate from said adjusting ring member (72) so as to allow rotation of said adjusting ring member (72) relative to said connecting seat (71).

9. The coffee bean grinder (100) as claimed in Claim 8, **characterized in that** said locking member (741) is movable by said machine body (200) in a direction of the grinding axis (X) relative to said connecting seat (71) .

10. The coffee bean grinder (100) as claimed in Claim 9, **characterized in that**:
said adjusting ring member (72) has an annular toothed portion (722) that surrounds the grinding axis (X); and
said locking member (741) has a locking toothed portion (742) that is configured to be detachably meshed with said annular toothed portion (722) of said adjusting ring member (72), and that is movable in the direction of the grinding axis (X) such that, when said burr grinder (600) is mounted to said machine body (200), said locking toothed portion (742) is unmeshed from said annular toothed portion (722).

11. The coffee bean grinder (100) as claimed in Claim 10, **characterized in that** said machine body (200) includes a fineness display mechanism (5) that includes:
a display module (52);
a sensor module (51) for determining a gap value which represents said space between said inner burr (84) and said outer burr (83); and
a control module (53) for controlling said display module (52) to display the gap value.

12. The coffee bean grinder (100) as claimed in Claim 5, **characterized in that**:
said machine body (200) includes a coupling seat mechanism (4) that is provided for said burr grinder (600) to be mounted thereto, and that includes
a seat module (41) surrounding the grinding axis (X), and defining a grinder mounting space (410) for receiving said burr grinder (600),
at least one retaining module (43) mounted to said seat module (41), and extending retractably from said seat module (41) into said grinder mounting space (410) in a radial direction of the grinding axis (X), and
an unlocking ring (42) mounted to said seat module (41), and being operable to rotate about the grinding axis (X) relative to said seat module (41) and to drive retraction of said at least one retaining module (43) into said seat module (41);
said connecting seat (71) of said burr grinder (600) has at least one coupling groove (7111) that is formed in an outer surface thereof, that corresponds in number with said at least one retaining module (43), and that is detachably engaged with said at least one retaining module (43) so as to retain said connecting seat (71) on said seat module (41); and
when rotation of said unlocking ring (42) drives retraction of said at least one retaining module (43), said at least one retaining module (43) becomes detached from said at least one coupling groove (7111) of said connecting seat (71).

13. The coffee bean grinder (100) as claimed in Claim 12, **characterized in that**:
when said connecting seat (71) is placed into said grinder mounting space (410) to be mounted to said seat module (41), said at least one retaining module (43) is forced by said connecting seat (71) to retract into said seat module (41);
when said at least one coupling groove (7111) of said connecting seat (71) is registered with said at least one retaining module (43), said at least one retaining module (43) extends out of said seat module (41) to be engaged with said at least one coupling groove (7111), which generates an impact sound.

14. The coffee bean grinder (100) as claimed in Claim 13, **characterized in that**:
said at least one retaining module (43) includes
a coupling head (431) that has an abutting portion (434) configured for abutting against said unlocking ring (42), and an engaging portion (432) extending from said abutting portion (434) into said grinder mounting space (410) to be engaged with said at least one coupling groove (7111) of said connection seat (71), and
a seat resilient member (436) that is disposed between said abutting portion (434) of said coupling head (431) and said seat module (41) for biasing said coupling head (431) away from said seat module (41);
said unlocking ring (42) has
at least one pushing portion (424) that corresponds in number with said at least one retaining module (43), and that has a wedge surface (425) inclined relative to a radial direction of the grinding axis (X); and
when said unlocking ring (42) is operated to rotate, said wedge surface (425) of said at least one pushing portion (424) contacts and pushes said abutting portion (434) of said coupling head (431) against the biasing action of said seat resilient member (436) such that said engaging portion (432) becomes disengaged from said at least one coupling groove (7111) of said connection seat (71).

15. The coffee bean grinder (100) as claimed in Claim 14, **characterized in that**:
said coupling seat mechanism (4) includes a plurality of said retaining modules (43) that are arranged about said seat module (41), and that are angularly equidistant; and
said unlocking ring (42) includes a plurality of said pushing portions (424) that correspond in number with said retaining modules (43), and that correspond respectively in position with said retaining modules (43) .
